## Europäisches Patentamt

## European Patent Office

## Office européen des brevets

(19)

(11) Veröffentlichungsnummer: **0 117 398**
**B1**

(12)

# EUROPÄISCHE PATENTSCHRIFT

(45) Veröffentlichungstag der Patentschrift:
**23.07.86**

(51) Int. Cl.⁴: **G 01 K 13/02**

(21) Anmeldenummer: **84100280.1**

(22) Anmeldetag: **12.01.84**

(54) Vorrichtung zur Messung der Temperatur in einem mit Staub beladenen Gasstrom.

(30) Priorität: **21.01.83 DE 3301886**

(43) Veröffentlichungstag der Anmeldung:
**05.09.84 Patentblatt 84/36**

(45) Bekanntmachung des Hinweises auf die Patenterteilung:
**23.07.86 Patentblatt 86/30**

(84) Benannte Vertragsstaaten:
**AT BE CH DE FR GB IT LI LU NL SE**

(56) Entgegenhaltungen:
**GB-A-2 003 659**
**US-A-4 064 756**

(73) Patentinhaber: **STEAG AG, Bismarckstrasse 54
Postfach 10 37 62, D-4300 Essen 1 (DE)**

(72) Erfinder: **Kampmann, Harry, Am Lüner Brunnen 6,
D-4670 Lünen (DE)**

EP 0 117 398 B1

**Beschreibung**

Die Erfindung betrifft eine Vorrichtung zur Messung der Temperatur der im Oberbegriff des Anspruches 1 genannten Art.

Solche Vorrichtungen werden zum Beispiel bei der Sichtertemperaturmessung an Kohlemühlen in Kohlekraftwerken eingesetzt. Bei einer bekannten Vorrichtung ist in dem Prallstab eine Bohrung vorgesehen, in der der Temperaturfühler angeordnet ist. Der Verschleiß des Prallstabs bei Betrieb der Vorrichtung kann nicht erfaßt und erst durch Ausbau der Vorrichtung aus der Meßstelle überprüt werden. Wenn der Verschleiß des Prallstabs durch den Staub im Gasstrom so weit fortgeschritten ist, daß die den Temperaturfühler aufnehmende Bohrung erreicht wird, besteht die Gefahr, daß der Temperaturfühler zerstört wird.

Aus der US-PS 40 64 756 ist eine Vorrichtung der eingangs genannten Art bekannt, bei der der Temperaturfühler in einem Montagerohr angeordnet ist, das auf seiner von der Anströmung abgewandten Seite mit einer zur Oberfläche des Montagerohrs hin offenen Ausnehmung versehen ist. Im Montagerohr und in der Ausnehmung ist der Temperaturfühler ohne Berührung mit der Wandung der Ausnehmung angeordnet. Auf der der Ausströmung zugewandten Seite ist auf der Oberfläche des Montagerohrs ein Schutzschild in Form eines Metallblocks befestigt. Der Verschleiß des Metallblocks während des Betriebs kann ohne Ausbau der Vorrichtung nicht überwacht werden.

Es ist die Aufgabe der vorliegenden Erfindung, eine Vorrichtung der im Oberbegriff des Anspruches 1 genannten Art zu schaffen, bei der ein Verschleiß ohne Ausbau der Vorrichtung erfaßt werden kann.

Diese Aufgabe wird dadurch gelöst, daß in dem Prallstab im wesentlichen parallel zum Temperaturfühler und mit Abstand von ihm mindestens ein mit einem unter Druck stehenden Strömungsmittel gefüllter Längskanal vorgesehen ist, der in Strömungsrichtung des Gasstroms gesehen, vor dem Temperaturfühler liegt, und daß der Kanal mit einem Druckfühler verbunden ist.

Wenn der Verschleiß des Prallstabs durch den Staub im Gasstrom so weit fortgeschritten ist, daß der Kanal erreicht wird, erfolgt ein Druckabbau im Kanal, der durch den Druckfühler erfaßt wird.

Ein solcher Längskanal kann bei einer Vorrichtung eingesetzt werden, bei der der Temperaturfühler in bekannter Weise in einer mittigen Bohrung mit geschlossenem Mantel angeordnet ist. Es wird jedoch bevorzugt, wenn der Temperaturfühler in einer zur Oberfläche des Prallstabs hin offenen Ausnehmung, ohne Berührung mit ihrer Wandung, angeordnet ist und wenn die Ausnehmung auf der von der Anströmung abgewandten Seite des Prallstabs ausgebildet ist.

Während bei einer bekannten mittigen Anordnung des Temperaturfühlers nur der halbe Querschnitt des Prallstabs zur Verschleißsicherung beiträgt, wird bei der bevorzugten Anordnung in einer Ausnehmung der größere Querschnittsanteil des Prallstabs zur Verschleißsicherung herangezogen. Bei der aus der US-PS 40 64 756 bekannten Anordnung, bei der der Verschleißschutz nur von einem auf dem vorderen Ende des Montagerohrs angeordneten Schutzschild aufgebaut wird, ist eine Herausführung eines solches Verschleißmeldekanals nicht möglich, da nur der relativ schmale Ringquerschnitt des Führungsrohres zur Verfügung steht.

Der Druckfühler kann z. B. ein am Meßort angeordnetes Manometer sein; weiterhin ist es möglich, an der Meßstelle einen elektrischen Druckschalter anzuordnen, so daß ein elektrisches Signal von der Meßstelle z. B. zu einer Schaltwarte eines Kraftwerks hin übertragen werden kann, in der der Druckabfall durch eine optische und/oder akustische Alarmanlage oder einen Störwertdrucker erfaßt werden kann. Die Lage des Verschleißmeldekanals bezüglich des Temperaturfühlers, bzw. der Ausnehmung, kann so gewählt werden, daß nach Erreichen des Kanals noch so viel Material des Prallstabs ansteht, daß die Vorrichtung noch eine bestimmte Zeit betriebsfähig bleibt.

Vorzugsweise wird als Strömungsmittel für das Auffüllen des Verschleißmeldekanals Wasser verwendet, das unter einem bestimmten Vordruck eingefüllt wird, so daß sich bei Betriebstemperatur ein bestimmter Betriebsdruck einstellt, z. B. 2,5 bar. Weiterhin ist es von Vorteil, wenn dem Strömungsmittel Dichtmittel zugesetzt werden, z. B. aus der Kraftfahrzeugtechnik bekannte Kühlerschutzmittel, da dann das Entweichen von Strömungsmittel durch sich evtl. ausbildende Haarrisse vermieden wird und ein Druckabfall im Verschleißmeldekanal mit Sicherheit erst beim Erreichen der Kanalwandung selbst erfolgt.

Es ist auch möglich, mehrere Verschleißmeldekanäle im Prallstab vorzusehen, so daß z. B. beim Betrieb Hinweise auf den Fortgang des Verschleißes vorhanden sind, wenn diese Kanäle nacheinander von der Verschleißfront erreicht werden.

Die Erfindung soll nun anhand der beigefügten Figuren erläutert werden. Es zeigt:

Figur 1
eine Seitenansicht der erfindungsgemäßen Vorrichtung in einer Lage, bei der die Strömungsrichtung des Gases die Zeichenebene senkrecht von unten durchstößt,

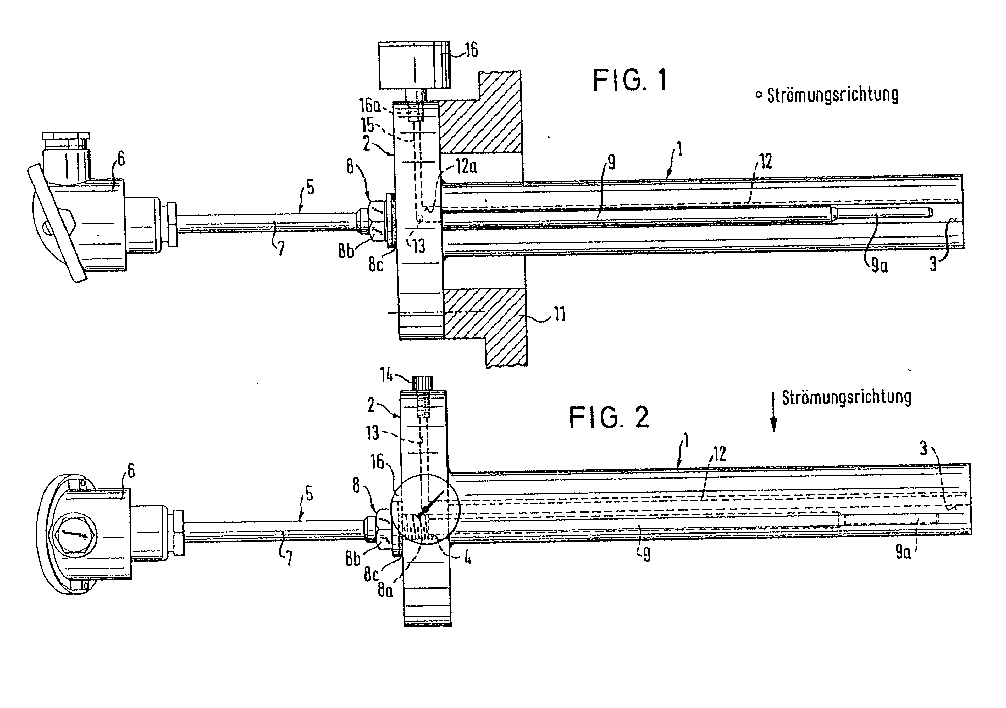

Figur 2
eine Aufsicht auf die erfindungsgemäße Vorrichtung, wobei die Strömung in der Zeichnungsebene der Figur 2 von oben nach unten gerichtet ist,

Figur 3
eine Endansicht der Vorrichtung vom freien Ende des Prallstabes her.

Ein Prallstab 1 aus einem verschleißfesten Material ist an seinem einen Ende mit einem Flansch 2 verschweißt. Parallel zur Achse ist in den Prallstab 1 eine sich zur Oberfläche des Prallstabs hin öffnende Ausnehmung 3 eingearbeitet. In den Flansch 2 ist unter Ausfluchtung mit der Ausnehmung 3 eine Bohrung 4 mit Innengewinde vorgesehen. In die Bohrung 4 ist ein Temperaturfühler 5 eingeschraubt.

Der Temperaturfühler 5 weist einen Anschlußabschnitt 6, einen Halsrohrabschnitt 7, einen Befestigungsabschnitt 8 und einen Meßabschnitt 9 auf.

Der Befestigungsabschnitt 8 besitzt ein Außengewinde 8a, das dem Innengewinde der Bohrung 4 entspricht, und weist einen Sechskantkopf 8b auf, der ein Eindrehen in den Flansch 2 ermöglicht. Zwischen Auflagefläche des Sechskantkopfes 8b und der Auflagefläche des Flansches 2 ist ein Dichtring 8c eingebracht.

Die Spitze des Meßabschnitts 9 ist als schnell ansprechende Spitze 9a verringerten Durchmessers ausgebildet. In der schnell ansprechenden Spitze 9a ist ein Thermoelement, z. B. NiCr-Ni-Element, angeordnet, dessen Zuleitungen durch Meßabschnitt 9, Befestigungsabschnitt 8, Halsrohrabschnitt 7 zum Anschlußabschnitt 6 geführt sind. Da der elektrische bzw. elektronische Aufbau des Temperaturfühlers nicht Gegenstand der vorliegenden Erfindung ist, wird auf die Beschreibung von Einzelheiten verzichtet. Die Lage der Bohrung 4 bezüglich der Ausnehmung 3 und die Geometrie sind so gewählt, daß bei eingeschraubtem Befestigungsabschnitt 8 der Meßabschnitt 9 die Wandung der Ausnehmung 3 nicht berührt. Der Flansch 2 ist mit mehreren gleichmäßig um den Umfang herum verteilten Befestigungslöchern 10 versehen, durch die nicht gezeigte Schraubbolzen zur Befestigung der Meßvorrichtung an einer schematisch in der Figur 1 gezeigten Wandung 11, die den Gasstrom begrenzt, greifen derart, daß Prallstab und Meßabschnitt zumindest im Bereich der schnell ansprechenden Spitze 9a in der Gasströmung liegen.

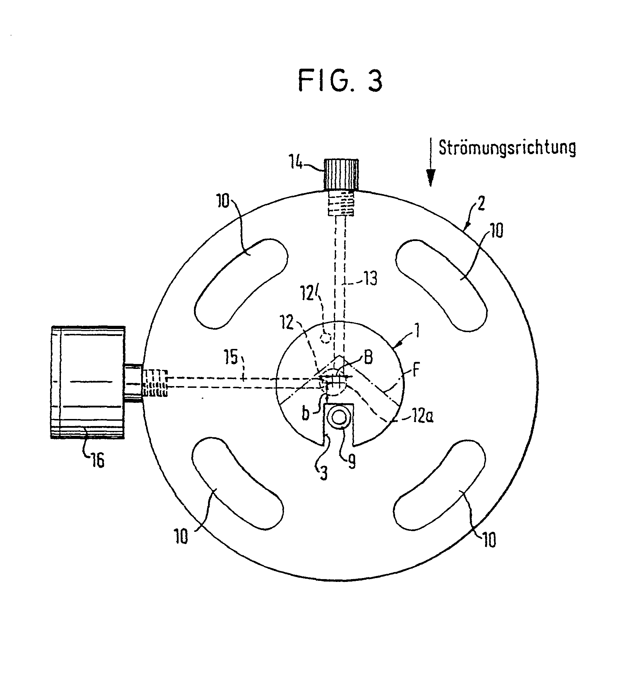

In den Figuren 1 - 3 sind die Strömungsrichtungen durch die üblicherweise verwendeten Pfeilsymbole dargestellt. In der Figur 3 ist strichpunktiert angedeutet, daß sich durch den Verschleiß der kreisförmige Ausgangsquerschnitt zu einem keilartigen Querschnitt verändert.

Um den Verschleiß zu erfassen, ist in dem Prallstab ein in der Nähe des freien Endes des Prallstabs endender Verschleißerkennungskanal 12 ausgebildet, der sich parallel zum Meßabschnitt 9 des Temperaturfühlers 5 und damit parallel zur Ausnehmung 3 erstreckt. Wegen der keilförmigen Ausbildung des Verschleißquerschnittes liegt der Kanal 12 um den Betrag B versetzt zur durch den Meßfühler 5 gehenden Mittelebene und in einem vorgegebenen Abstand b vom Boden der Ausnehmung 3 (vgl. Figur 3).

Der Kanal 12 im Prallstab 1 mündet in einer Verbindungssackbohrung 12a im Flansch 2, in die sich auch ein im Flansch ausgebildeter Radialkanal 13 öffnet. Der Radialkanal 13 ist durch einen Gewindestopfen 14 verschlossen.

Mit der Verbindungssackbohrung 12a ist weiterhin ein sich in eine andere Richtung als der Radialkanal 13 erstreckender Radialkanal 15 verbunden, der an seinem Ende durch ein Manometer 16 mit Gewindeansatz 16a verschlossen ist. Nach Einschrauben des Manometers 16 wird das Kanalsystem 12, 13 und 16 mit Wasser gefüllt, das ggf. mit einem Kühlerzusatzmittel versetzt ist, und danach der Stopfen 14 eingeschraubt, bis sich ein auf dem Manometer 16 ablesbarer vorgegebener Vordruck einstellt. Der Gewindestopfen 14 wird durch geeignete Sicherungsmaßnahmen in seiner Stellung gesichert (z. B. verklebt). Das Manometer 16 ist für den sich bei der Betriebstemperatur in dem Kanalsystem einstellenden Druck ausgelegt. Erreicht die Verschleißfront F den Kanal 12, entleert sich das Kanalsystem, was als Druckabfall an dem Manometer ablesbar ist. Anstelle des Manometers 16 oder zusätzlich zu dem Manometer kann ein elektrischer Druckschalter versehen sein, so daß der Druckabfall in dem Kanalsystem zur Warte hin übertragen werden kann.

Es ist auch möglich, daß dem Kanal 12 ein weiterer Kanal 12' (vgl. Figur 3) mit separater Druckanzeige vorgeschaltet ist, so daß ein zeitlicher Verlauf des Verschleißes erfaßbar ist. Für die meisten Anwendungsfalle reicht aber ein Kanal 12 aus. Die Abmaße für B und b werden vorzugsweise so eingestellt, daß nach dem Druckabfall noch eine vorgegebene Betriebszeit gewährleistet ist; der Druckabfall in dem Kanalsystem wird dann registriert, und bei der nächsten Gelegenheit, bei der der Gaskanal nicht mit der zu erfassenden Gasströmung beaufschlagt ist, wird der Prallstab ausgetauscht.

Bei der erfindungsgemäßen Anordnung kann der Temperaturfühler auf einfache Weise aus dem Flansch ausgeschraubt und damit vom Prallstab 1 getrennt werden.

Bei Verschleiß des Prallstabes ist es möglich, daß die gesamte Einheit bestehend aus Prallstab 1 und Flansch 2 nach Demontage des Manometers ausgetauscht wird oder daß mit dem Flansch 2 nur ein neuer Prallstab 1 verschweißt wird.

**Patentansprüche**

1. Vorrichtung zur Messung der Temperatur in einem mit Staub beladenen Gasstrom, mit einem Temperaturfühler, (5, 9, 9a), einem mit dem Temperaturfühler (5, 9, 9a) parallel verlaufenden, ihn wenigstens teilweise umschließenden Prallstab (1) und einer Einrichtung (2) zum Halten des Temperaturfühlers (5, 9, 9a) und des Prallstabs (1) in dem Gasstrom im wesentlichen quer zur Strömungsrichtung, dadurch gekennzeichnet,

daß in dem Prallstab (1) im wesentlichen parallel zum Temperaturfühler (5, 9, 9a) und mit Abstand von ihm mindestens ein mit einem unter Druck stehenden Strömungsmittel gefüllter Längskanal (12) vorgesehen ist, der, in Strömungsrichtung des Gasstroms gesehen vor dem Temperaturfühler (5, 9, 9a) liegt, und daß der Kanal (12) mit einem Druckfühler (16) verbunden ist.

2. Vorrichtung nach Anspruch 1, dadurch gekennzeichnet,

daß der Temperaturfühler (5, 9, 9a) in einer zur Oberfläche des Prallstabs (1) hin offenen Ausnehmung (3), ohne Berührung mit ihrer Wandung, angeordnet ist und daß die Ausnehmung (3) auf der von der Anströmung abgewandten Seite des Prallstabs (1) ausgebildet ist.

3. Vorrichtung nach Anspruch 1 oder 2, dadurch gekennzeichnet,

daß der Längskanal (12) mit einem elektrischen Druckschalter zur Bereitstellung eines elektrischen Signals an einer von der Meßstelle entfernten Anzeigestelle verbunden ist.

4. Vorrichtung nach einem der Ansprüche 1 bis 3, dadurch gekennzeichnet,

daß das im Längskanal (12) enhaltene Strömungsmittel Wasser ist.

5. Vorrichtung nach einem der Ansprüche 1 bis 4, dadurch gekennzeichnet,

daß dem Strömungsmittel ein Dichtmittel zugesetzt ist.

## Claims

1. Apparatus for the measurement of temperature in a dust-laden gas stream, comprising a temperature sensor (5, 9, 9a), a baffle rod (1) running parallel to the temperature sensor (5, 9, 9a) and surrounding it at least partially, and a device (2) for holding the temperature sensor (5, 9, 9a) and the baffle rod (1) in the gas stream substantially transverse to the direction of flow, characterised in that at least one longitudinal channel (12) filled with a pressurised flow agent is provided in the baffle rod (1) substantially parallel to the temperature sensor (5, 9, 9a) and at a distance from it, said longitudinal channel (12) lying upstream of the temperature sensor (5, 9, 9a) with respect to the direction of flow of the gas stream, and in that the channel (12) is connected to a pressure sensor (16).

2. Apparatus according to claim 1, characterised in that the temperature sensor (5, 9, 9a) is arranged in a recess (3) open towards the surface of the baffle rod (1), without touching the walls of said recess, and in that the recess (3) is positioned on the side of the baffle rod (1) facing away from the oncoming flow.

3. Apparatus according to claim 1 or 2, characterized in that the longitudinal channel (12) is connected to an electrical pressure switch for providing an electric signal at an indicating point remote from the measuring point.

4. Apparatus according to any of claims 1 to 3, characterised in that the flow agent contained in the longitudinal channel (12) is water.

5. Apparatus according to any of claims 1 to 4, characterised in that a sealing agent is added to the flow agent.

## Revendications

1. Appareil pour mesurer la température dans un courant gazeux chargé de poussière, comprenant une sonde de température (5, 9, 9a), une tige d'impact (1) s'étendant parallèlement à la sonde de température (5, 9, 9a) et l'enveloppant au moins partiellement, et un dispositif (2) pour maintenir la sonde de température (5, 9, 9a) et la tige d'impact (1) dans le courant gazeux sensiblement transversalement à la direction du courant, caractérisé en ce que, dans la tige d'impact (1), sensiblement parallèlement à la sonde de température (5, 9, 9a) et à distance de celle-ci, est prévu au moins un canal longitudinal (12) rempli d'un milieu susceptible de s'écouler et maintenu sous pression, canal qui, vu dans la direction d'écoulement du courant gazeux, se trouve en avant de la sonde de température (5, 9, 9a), et en ce que le canal (12) est raccordé à un détecteur de pression (16).

2. Appareil selon la revendication 1, caractérisé en ce que la sonde de température (5, 9, 9a) est aménagée dans un évidement (3) qui ouvre à la surface de la tige d'impact (1), sans toucher la paroi de celui-ci, et en ce que l'évidement (3) est formé sur le côté de la tige d'impact (1) opposé à l'arrivée du courant.

3. Appareil selon la revendication 1 ou 2, caractérisé en ce que le canal longitudinal (12) est raccordé à un manocontact électrique destiné à fournir un signal électrique à un emplacement d'indication éloigné de l'emplacement de mesure.

4. Appareil selon l'une des revendications 1 à 3, caractérisé en ce que le milieu susceptible de s'écouler contenu dans le canal longitudinal (12) est de l'eau.

5. Appareil selon l'une des revendications 1 à 4, caractérisé en ce qu'un agent d'étanchéité est ajouté au milieu susceptible de s'écouler.

FIG. 1

∘ Strömungsrichtung

Strömungsrichtung

FIG. 2

0 117 398

# FIG. 3

Strömungsrichtung